## Europäisches Patentamt

## European Patent Office

## Office européen des brevets

(11) Veröffentlichungsnummer: **0 157 108**
**B1**

# (12) EUROPÄISCHE PATENTSCHRIFT

(45) Veröffentlichungstag der Patentschrift:
08.02.89

(21) Anmeldenummer: 85101056.1

(22) Anmeldetag: 01.02.85

(51) Int. Cl.⁴: **C 08 F 210/02, C 08 F 2/00 //**
**(C08F210/02, 220:04, 222:02)**

(54) Verfahren zur Herstellung von Copolymerisaten des Ethylens mit carboxylgruppenhaltigen Comonomeren in einem 2-Zonen-Reaktor bei Drücken oberhalb 500 bar.

(30) Priorität: 10.02.84 DE 3404742

(43) Veröffentlichungstag der Anmeldung:
09.10.85 Patentblatt 85/41

(45) Bekanntmachung des Hinweises auf die Patenterteilung:
08.02.89 Patentblatt 89/6

(84) Benannte Vertragsstaaten:
AT BE DE FR GB NL

(56) Entgegenhaltungen:
EP-A- 0 096 221
EP-A- 0 098 488
DE-A- 1 812 094
DE-A- 1 952 693
US-A- 3 520 861

(73) Patentinhaber: BASF Aktiengesellschaft,
Carl-Bosch-Strasse 38, D-6700 Ludwigshafen (DE)

(72) Erfinder: Metzger, Werner, Dr., Bergstrasse 12,
D-6717 Hessheim (DE)
Erfinder: Brandstetter, Franz, Dr., Ritterbueschel 45,
D-6730 Neustadt (DE)
Erfinder: Boettcher, Klaus, Dr., Antoniusstrasse 5,
D-5047 Wesseling (DE)
Erfinder: Pfleger, Klaus, Dr., Otto-Strasse 6,
D-5047 Wesseling (DE)

## Beschreibung

Die Erfindung betrifft ein Verfahren zur Herstellung von Copolymerisaten des Ethylens mit 1,0 bis 2,5 Mol, bezogen auf 100 Mole Ethylen, an einpolymerisierten $C_3$- bis $C_6$-Alkencarbonsäuren in einem kontinuierlich betriebenen rohrförmigen Polymerisationssystem bei Drücken von 500 bis 5000 bar und Temperaturen von 50 bis 450 °C in Gegenwart von radikalisch zerfallenen Polymerisationsinitiatoren, in dem man dem Polymerisationssystem an dessen Einlassstelle und gleichzeitig an einer zweiten Stelle hinter der Einlassstelle entlang des Polymerisationssystems, wo die Reaktionstemperatur ein Maximum überschritten hat, ein Gemisch aus Ethylen, der Alkencarbonsäure, gegebenenfalls einem weiteren mit Ethylen copolymerisierbaren Monomeren, Initiator und gegebenenfalls Regler zuführt.

Es ist bereits bekannt, bei der Hochdruckpolymerisation von Ethylen den Ethylenstrom in mehrere Teilströme aufzuteilen und dann einen dieser Teilströme nach dem Erwärmen auf Anspringtemperatur in den Anfang eines rohrförmigen Reaktors einzuleiten. Der andere bzw. die anderen Teilströme werden dann bei diesem bekannten Verfahren kalt an mehreren in Strömungsrichtung des polymerisierenden Ethylens hintereinanderliegenden Stellen des Reaktors zugeführt. Das kalte Ethylen wird dabei an oder kurz hinter den Stellen des Reaktors eingeleitet, wo das Polymerisationsgemisch im Reaktor die maximal zulässige Polymerisationstemperatur überschritten hat. Dabei wird die Temperatur des kalt eingeleiteten Ethylens, welches ebenfalls Initiator enthält, so bemessen, dass die Temperatur nach der Zumischung im Reaktor nicht unter die Anspringtemperatur der Ethylenpolymerisation, die von dem verwendeten Katalysator abhängt, sinkt. Auf diese Weise ist es möglich, den Umsatz des Ethylens zu Polyethylen pro Durchsatz zu erhöhen. Bei diesem bekannten Verfahren werden dem Ethylen z.B. vor oder nach der Komprimierung Luftsauerstoff als Polymerisationsinitiator zugegeben. Auch können statt Luftsauerstoff Peroxide oder Hydroperoxide oder Mischungen von Peroxidverbindungen zugeführt werden (vgl. US-A-3 725 378).

Es ist auch bereits bekannt, Copolymerisate des Ethylens mit carboxylgruppenhaltigen Comonomeren im Autoklaven herzustellen (vgl. US-A-3 520 861 und US-A-4 351 931).

Des weiteren sind Terpolymerisate des Ethylens mit carboxylgruppenhaltigen Monomeren und einem weiteren mit Ethylen copolymerisierbaren Monomeren beispielsweise in den britischen Patentschriften 1 298 732, 1 196 185 und 1 468 228 beschrieben. In der DE-A-1 952 693 ist die Möglichkeit erwähnt, Ethylencopolymerisate mit carboxylgruppenhaltigen Comonomeren bzw. mit anderen Comonomeren in einem Einzonenreaktor herzustellen.

Nachteil der bekannten Verfahren zur Copolymerisation von Ethylen mit Alkencarbonsäuren – sowohl im Autoklaven als auch im Einzonenreaktor – ist der unbefriedigende Umsatz der Alkencarbonsäuren. Es ist zwar aus der DE-A-1 812 094 bekannt, den Umsatz bei der Copolymerisation von Ethylen mit grösseren Mengen Vinylacetat dadurch zu erhöhen, dass man in einen Zweizonenrohrreaktor sowohl an der Einlassstelle als auch an der zweiten Zufuhrstelle ein Gemisch aus Ethylen und Vinylester zudosiert. Bei diesem bekannten Verfahren wird aber ein Comonomer eingesetzt, das im Gegensatz zu einer Alkencarbonsäure aufgrund der günstigen Copolymerisationsparameter mit Ethylen in jedem gewünschten Molverhältnis leicht zu homogenen Copolymerisaten copolymerisierbar ist.

Während es sich bei den oben erwähnten Verfahren um Direktpolymerisationen des Ethylens mit carboxylgruppenhaltigen Comonomeren handelt, besteht des weiteren die Möglichkeit, Carboxylgruppen enthaltende Copolymerisate des Ethylens durch die thermische Spaltung bzw. durch Verseifung von Ethylencopolymerisaten mit Acrylsäureestern zu erhalten, wie es beispielsweise in der US-A-3 132 120 beschrieben ist. Bei dem Verfahren, das mit thermischer Spaltung von Acrylsäureestern arbeitet, wobei im besonderen thermolabile Acrylsäureester wie tert.-Butylacrylat eingesetzt werden, ist man aufgrund der thermischen Labilität des Monomeren sehr stark in der Temperaturführung im Reaktionssystem eingeschränkt. Dies führt zu einer verminderten Flexibilität des Verfahrens und auch zu niedrigen Umsätzen. Wird eine Verseifung des Acrylsäureesters durchgeführt, so ist ein weiterer verfahrenstechnischer Schritt nötig, der auch wieder zu höheren Kosten führt.

Der vorliegenden Erfindung lag also die Aufgabe zugrunde, ein verbessertes Verfahren, das die Copolymerisation von Ethylen mit carboxylgruppenhaltigen Comonomeren in einem rohrförmigen Polymerisationssystem bei hohen Umsätzen ermöglicht, aufzufinden.

Diese Aufgabe wurde erfindungsgemäss dadurch gelöst, dass in dem eingangs beschriebenen Verfahren an der Einlassstelle des Polymerisationssystems die Menge an Alkencarbonsäure, bezogen auf 100 Mol Ethylen, maximal 0,3 Mol beträgt und der Rest an der zweiten Zuführstelle zudosiert wird.

Nach bevorzugten Verfahren wird mehr als 50 Mol% der Alkencarbonsäure an der zweiten Zuführstelle zudosiert. Bevorzugt ist auch ein Verfahren, bei dem weniger als 0,28 Mol Alkencarbonsäure, bezogen auf 100 Mol Ethylen, an der Einlassstelle zudosiert wird.

Unter Copolymerisaten des Ethylens mit $C_3$- bis $C_6$-Alkencarbonsäuren werden die Copolymerisate des Ethylens verstanden, die bei den angegebenen Temperatur- und Druckverhältnissen herstellbar sind. Bevorzugt ist ein Temperaturbereich von 150 bis 350 °C und ein Druckbereich von 150 bis 3000 bar. Der Ausdruck Copolymerisate des Ethylens mit $C_3$- bis $C_6$-Alkencarbonsäuren umfasst Copolymerisate mit Gehalten an einpolymerisierten carboxylgruppenhaltigen Comonomeren von 1,0 bis 2,5 Mol, bezogen auf 100 Mol Ethylen. Wird ein weiteres, mit Ethylen copolymerisierbares Comonomer zusätzlich verwendet, so liegt der Gehalt an zusätzlich einpolymerisiertem Comonomeren unter 7 Mol, bezogen auf 100 Mol Ethylen, vorzugsweise im Bereich von 1 bis 4 Mol. Als $C_3$- bis $C_6$-Alkencarbonsäuren kommen insbesondere in Betracht: Acrylsäure, Methacrylsäure, Itaconsäure, Aconitsäure, Maleinsäure, Citraconsäure. Besonders geeignet sind Acrylsäure und Methacrylsäure.

Als weitere Comonomere kommen alle mit Ethylen copolymerisierbaren Monomeren, insbesondere solche, die monoethylenisch ungesättigt sind, in Frage. Geeignet sind z.B. Ester der (Meth)acrylsäure von Alkoholen mit 1 bis 8 Kohlenstoffatomen; Vinylcarbonsäureester, insbesondere Vinylester von $C_1$- bis $C_6$-Alkancarbonsäuren; Ester ethylenisch ungesättigter Dicarbonsäuren, insbesondere Mono- oder Diester der Maleinsäure und Fumarsäure; Amide monoethylenisch ungesättigter Carbonsäuren, insbesondere Acryl- und Methacrylsäureamid; sowie N-Mono- und N-Dialkylamide der Acryl- und Methacrylsäure: monoethylenisch ungesättigte Ketone oder Kohlenmonoxid. Besonders bevorzugt sind Ester der (Meth)acrylsäure von Alkoholen mit $C_1$- bis $C_8$-Kohlenstoffatomen. Insbesondere bevorzugt sind Methyl-, Ethyl- und n-Butylacrylat.

Das Ethylen wird mit den $C_3$- bis $C_6$-Alkencarbonsäuren und gegebenenfalls mit den anderen mit Ethylen copolymerisierbaren Comonomeren in Gegenwart radikalischer Initiatoren copolymerisiert. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmässigerweise in Mengen von 2 bis 100 Mol-ppm, bezogen auf das zu polymerisierende Ethylen. In Betracht kommen ausserdem Peroxide und andere Radikalbildner, sowie Gemische von Peroxiden, die unterschiedliche Zersetzungspunkte haben und Hydroperoxide sowie Mischungen aus Sauerstoff und Peroxiden und/oder Hydroperoxiden.

Als Beispiele für Peroxide und Hydroperoxide seien genannt: Tert.-butylperoxipivalat, Di-tert.-butylperoxid, Tert.-butylhydroperoxid, Tert.-butylperbenzoat oder Dilauroylperoxid. Unter radikalischen Polymerisationsinitiatoren sollen auch Verbindungen wie Azoisobuttersäuren verstanden werden. Man kann auch Mischungen aus Sauerstoff und ein oder mehreren Peroxiden verwenden.

Im allgemeinen arbeitet man in Gegenwart von Polymerisationsreglern. Mit Hilfe der Polymerisationsregler ist es möglich, den Schmelzindex der entstehenden Copolymerisate einzustellen. Als Regler eignen sich beispielsweise Wasserstoff, Ketone, Alkohole, Ether oder normale und verzweigte Kohlenwasserstoffe. Vorzugsweise verwendet man Propylen, Buten oder Propionaldehyd.

Die Copolymerisation wird im allgemeinen in Abwesenheit eines Lösungsmittels durchgeführt. Die geringen Mengen eines inerten Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator alleine gearbeitet, kann jegliches Lösungsmittel entfallen.

Das Verfahren lässt sich unter Anwendung der üblich betriebenen rohrförmigen Hochdruckpolymerisationssystemen (Rohrreaktoren) ausführen. Unter Rohrreaktoren versteht man rohrförmige Polymerisationsgefässe, deren Verhältnis Länge: Durchmesser der druckfesten Rohre im Bereich von 10 000 bis 60 000 : 1 liegt. Angaben über Ethylen-Hochdruckpolymerisationsverfahren, bei denen Rohrreaktoren benutzt werden, finden sich beispielsweise in «Ullmann's Enzyklopädie der technischen Chemie», (1980), 4. Auflage, Bd. 19, Seiten 167–178, Verlag Chemie GmbH, D-6940 Weinheim.

Bei dem erfindungsgemässen Verfahren wird nun das gasförmige Gemisch aus Ethylen, $C_1$- bis $C_6$-Alkencarbonsäure, gegebenenfalls einem weiteren mit Ethylen copolymerisierbaren Monomer, Initiator und gegebenenfalls Regler an der Einlassstelle und gleichzeitig an einer zweiten Stelle hinter der Einlassstelle entlang des Rohrreaktors in Strömungsrichtung des polymerisierenden Ethylens, wo die Reaktionstemperatur ein Maximum überschritten hat, entsprechend dem Verfahren der oben zitierten US-Patente 3 725 378 und 4 076 919 dem Reaktor zugeführt. Unter Einlassstelle wird im allgemeinen der Anfang des rohrförmigen Reaktors verstanden. Der Hauptstrom wird dabei am Anfang des Reaktors zugeleitet, der Nebenstrom wird dem Reaktor in bekannter Weise in der Nähe der zweiten Stelle, an der sich ein Temperaturmaximum bildet, zugeführt. Durch diese Massnahme wird die Reaktionsführung des bekannten Zweizonenrohrreaktors erhalten.

In dem erfindungsgemäss verbesserten Verfahren wird an der Einlassstelle und an einer zweiten Zufuhrstelle entlang des Reaktors ein Gemisch aus Ethylen, Alkencarbonsäure, gegebenenfalls einem weiteren mit Ethylen copolymerisierbaren Monomeren, Initiator und gegebenenfalls Regler eingeleitet, wobei der Anteil an carboxylgruppenhaltigen Monomer an der Einlassstelle des Reaktors maximal bei 0,3 Mol, bevorzugt unter 0,28 Mol, bezogen auf 100 Mol Ethylen, liegt. Der Rest der $C_3$- bis $C_6$-Alkencarbonsäure wird dann an der zweiten Zufuhrstelle entlang des Reaktors zudosiert. Bevorzugt ist auch ein Verfahren, bei dem mehr als 50 Mol% der Alkencarbonsäure an der zweiten Zufuhrstelle dem Reaktor zudosiert werden. Des weiteren ist bei dem erfindungsgemäss verbesserten Verfahren die Mitverwendung eines weiteren mit Ethylen copolymerisierbaren Monomeren möglich. So führt man in einem besonders bevorzugten Verfahren eine Mischung aus Ethylen, 0,1 bis 0,25 Mol Acrylsäure und 0,1 bis 0,3 Mol n-Butylacrylat, bezogen auf 100 Mol Ethylen, an der Einlassstelle und an der zweiten Zufuhrstelle 0,4 bis 0,8 Mol Acrylsäure und 0,55 bis 0,8 Mol n-Butylacrylat dem Reaktor zu.

Die erfindungsgemässe Dosierung der Alkencarbonsäuren zur ersten und zweiten Zone des Zweizonenreaktors führt zu Copolymerisaten des Ethylens mit carboxylgruppenhaltigen Comonomeren mit guten Eigenschaften bei hohen Umsätzen.

Beispiele

Die Copolymerisation des Ethylens mit den Comonomeren wurde in allen Fällen in einem rohrförmigen Reaktor durchgeführt. Das Ethylen wurde in zwei separaten Gasströmen mit dem Mengenverhältnis 1:1 mit der jeweils angegebenen Sauerstoffmenge und der notwendigen Reglermenge versetzt und bis auf Reaktionsdruck aufkomprimiert. Von den Gassträngen wurde in allen Fällen der eine der Einlassstelle des Reaktors zugeführt und der andere an einer zweiten Gaszufuhrstelle etwa nach 1:3 der gesamten Reaktorlänge, nachdem sich die Reaktion in dem ersten Reaktorteil mit einem Temperaturmaximum ausgebildet hatte und die Temperatur des Gemisches schon wieder am Abklingen war, dem Reaktor zugeführt. Durch diese Massnahme bildeten sich zwei Reaktionszonen in dem rohrförmigen Reaktor (Zweizonenreaktor).

Der Reaktor hatte in beiden Reaktionszonen ein Längen-/Durchmesserverhältnis von etwa 10 000. Zur Abführung eines Teils der Reaktionswärme wurden die Rohrwände von aussen mit Wasser gekühlt. Bei der Durchführung der in den Beispielen angeführten Versuche wurde die zur Copolymerisation benötigte Menge an Comonomeren auf den Gasstrang zur ersten und zur zweiten Reaktionszone aufgeteilt.

Bei der Durchführung des Vergleichsversuchs 1 wurde ausschliesslich die erste Reaktionszone (Einzonenreaktor) benutzt. Der Vergleichsversuch 2 wurde in einem Autoklaven (Volumen 15 l; Länge-/Durchmesser-Verhältnis 2,5) durchgeführt.

Das anfallende Copolymerisat wurde in allen Fällen in bekannter Weise in den, dem Reaktor nachgeschalteten Abscheidern von den nicht umgesetzten Monomeren abgetrennt.

Beispiele 1 bis 3

Dem oben beschriebenen Zweizonen-Reaktor wurde an dessen Einlassstelle ein Gemisch aus
Beispiel 1: 982
Beispiel 2: 988
Beispiel 3: 994
Gewichtsteilen/Stunde Ethylen,
Beispiel 1: 6 (0,23 Mol/100 Mol Ethylen)
Beispiel 2: 5 (0,20 Mol/100 Mol Ethylen)
Beispiel 3: 6 (0,23 Mol/100 Mol Ethylen)
Gewichtsteilen/Stunde Acrylsäure und
Beispiel 1: 12
Beispiel 2: 7
Beispiel 3: 0
Gewichtsteilen/Stunde Acrylsäure-n-butylester, welches auf einen Druck von 2200 bar aufkomprimiert war, zugeführt.

Als Initiator wurde dem Gemisch
Beispiel 1: 21

Beispiel 2: 19
Beispiel 3: 22
Mol-ppm Sauerstoff und im Beispiel 3 zusätzlich 15 Mol-ppm Tert.-Butylperoxipivalat, jeweils bezogen auf Ethylen, zugegeben.

An der zweiten Zuführstelle wurde ein Gemisch bestehend aus
Beispiel 1: 955
Beispiel 2: 956
Beispiel 3: 986
Gewichtsteilen/Stunde Ethylen,
Beispiel 1: 14 (0,56 Mol/100 Mol Ethylen)
Beispiel 2: 19 (0,76 Mol/100 Mol Ethylen)
Beispiel 3: 14 (0,54 Mol/100 Mol Ethylen)
Gewichtsteilen/Stunde Acrylsäure und
Beispiel 1: 31
Beispiel 2: 25
Beispiel 3: 0
Gewichtsteilen/Stunde Acrylsäure-n-butylester und als Initiator
Beispiel 1: 16
Beispiel 2: 16
Beispiel 3: 17
Mol-ppm Sauerstoff, bezogen auf Ethylen, zugesetzt.

Der Druck lag an der zweiten Zuführstelle bei 2200 bar.

Durch die freiwerdende Reaktionswärme, die nicht an das Kühlmittel abgegeben wurde, erreichte das Reaktionsgemisch im ersten Teil des Reaktors eine Temperatur von 300 °C und nach der zweiten Zuführstelle eine Temperatur von 270 °C.

Als Molmassenregler wurden eingesetzt:
Beispiel 1: Propylen
Beispiel 2: Propylen
Beispiel 3: Propionaldehyd

Die Reglermenge wurde so bemessen, dass sich ein Schmelzindex von 7 (Beispiel 1, 2) bzw. 3 g/10 min (Beispiel 3, gemessen nach DIN 53 735 bei 190 °C und 2,16 kp, einstellte.

Auf diese wurden
Beispiel 1: 427 entsprechend einem Umsatz von 21,4 %
Beispiel 2: 452 entsprechend einem Umsatz von 22,6 %
Beispiel 3: 421 entsprechend einem Umsatz von 21,1 %
Gewichtsteile an Ethylencopolymerisaten erhalten, die
Beispiel 1: 1,75
Beispiel 2: 1,91
Beispiel 3: 1,41
Mol Acrylsäure, bezogen auf 100 Mol Ethylen, und
Beispiel 1: 2,39
Beispiel 2: 1,50
Beispiel 3: 0
Mol Acrylsäure-n-butylester, bezogen auf 100 Mol Ethylen einpolymerisiert enthalten.

Vergleichsversuche
Vergleichsversuch 1

Dem oben beschriebenen Einzonenreaktor wurde ein Gemisch, bestehend aus 1987 Gewichtsteilen/Stunde Ethylen, 13 Gewichtsteile/Stunde Acrylsäure und 58 Mol-ppm Sauerstoff, bezogen auf Ethylen, zugeführt. Der Druck lag bei 2200 bar. Durch die freiwerdende Reaktionswärme, die nicht über die Reaktorwand an das Kühlmittel abgegeben wurde, erreichte das Reaktionsgemisch eine Temperatur von 300 °C. Als Molmassenregler diente Propionaldehyd. Die Reglermenge wurde so bemessen, dass sich ein Schmelzindex von 3 g/10 min, gemessen nach DIN 53 735 bei 190 °C und 2,16 kp, einstellte. Der Umsatz lag bei 16,5%. Das Ethylencopolymerisat enthielt 1,41 Mol Acrylsäure, bezogen auf 100 Mol Ethylen.

Vergleichsversuch 2

Als Vergleichsversuch 2 diente der Run Nr. 2 des Beispiel I der US-Patentschrift 3 520 861. Der Umsatz lag in diesem Fall bei 10,3%.

**Patentansprüche**

1. Verfahren zur Herstellung von Copolymerisaten des Ethylens mit 1,0 bis 2,5 Mol bezogen auf 100 Mole Ethylen, an einpolymerisierten $C_3$- bis $C_6$-Alkencarbonsäuren in einem kontinuierlich betriebenen rohrförmigen Polymerisationssystem bei Drücken von 500 bis 5000 bar und Temperaturen von 50 bis 450 °C in Gegenwart von radikalisch zerfallenden Polymerisationsinitiatoren, in dem man dem Polymerisationssystem an dessen Einlassstelle und gleichzeitig an einer zweiten Stelle hinter der Einlassstelle entlang des Polymerisationssystems, wo die Reaktionstemperatur ein Maximum überschritten hat, ein Gemisch aus Ethylen, der Alkencarbonsäure, gegebenenfalls einem weiteren mit Ethylen copolymerisierbaren Monomeren, Initiator und gegebenenfalls Regler zuführt, dadurch gekennzeichnet, dass an der Einlassstelle des Polymerisationssystems die Menge an Alkencarbonsäure, bezogen auf 100 Mol Ethylen, maximal 0,3 Mol beträgt und der Rest an der zweiten Zuführstelle zudosiert wird.

2. Verfahren nach Anspruch 1, dadurch gekennzeichnet, dass mehr als 50 Mol% der Alkencarbonsäure an der zweiten Zuführstelle dem Reaktor zudosiert wird.

3. Verfahren nach Anspruch 1, dadurch gekennzeichnet, dass unter 0,28 Mol Alkencarbonsäure an der Einlassstelle zudosiert wird.

**Claims**

1. A process for the preparation of a copolymer of ethylene containing from 1.0 to 2.5 moles, based on 100 moles of ethylene, of a copolymerized $C_3$–$C_6$-alkenecarboxylic acid in a continuously operated tubular polymerization system under from 500 to 5,000 bar and at from 50 to 450 °C in the presence of a free radical polymerization initiator, in which a mixture of ethylene, the alkenecarboxylic acid, any further monomer which is copolymerizable with ethylene, an initiator and any regulator is fed into the polymerization system at its entrance and at the same time at a second point downstream of the entrance, along the polymerization system, where the reaction temperature has exceeded a maximum, wherein the amount of alkenecarboxylic acid at the entrance of the polymerization system is not more than 0.3 mole, based on 100 moles of ethylene, and the remainder is metered in at the second feed point.

2. A process as claimed in claim 1, wherein more than 50 mol% of the alkenecarboxylic acid is metered into the reactor at the second feed point.

3. A process as claimed in claim 1, wherein less than 0.28 mole of alkenecarboxylic acid is metered in at the entrance.

**Revendications**

1. Procédé de préparation de copolymères d'éthylène avec 1,0 à 2,5 moles, pour 100 moles d'éthylène, d'un acide alcènecarboxylique en $C_3$–$C_6$ copolymérisable, dans un système de polymérisation tubulaire exploité en continu à des pressions de 500 à 5000 bars et des températures de 50 à 450 °C en présence d'initiateurs de polymérisation à décomposition radicalaire, procédé dans lequel on envoie dans le système de polymérisation en son point d'entrée et simultanément en un deuxième point en aval du point d'entrée le long du système de polymérisation, où la température de réaction a dépassé un maximum, un mélange d'éthylène, de l'acide alcènecarboxylique, éventuellement d'un autre monomère copolymérisable avec l'éthylène, d'initiateur et éventuellement de régulateur, caractérisé en ce que, au point d'entrée du système de polymérisation, la quantité d'acide alcènecarboxylique se monte au plus à 0,3 mole pour 100 moles d'éthylène et le reste sera introduit de façon dosée au deuxième point d'admission.

2. Procédé selon la revendication 1, caractérisé en ce que plus de 50% en moles de l'acide alcènecarboxylique seront introduits de façon dosée au deuxième point d'admission du réacteur.

3. Procédé selon la revendication 1, caractérisé en ce que moins de 0,28 mole d'acide alcènecarboxylique sera introduit de façon dosée au point d'entrée.